# EUROPÄISCHE PATENTANMELDUNG

(11) **EP 4 722 830 A1**
(43) Veröffentlichungstag der Anmeldung: **08.04.2026**
(21) Anmeldenummer: 25206392.0
(22) Anmeldetag: 02.10.2025
(51) Int. Cl.: G05B 19/042, G05B 19/05

(54) **COMPUTERIMPLEMENTIERTES VERFAHREN ZUM AUTOMATISIERTEN BEREITSTELLEN VON SOFTWAREMODULEN FÜR DIE STEUERUNG EINES INDUSTRIELLEN SYSTEMS**

(30) Priorität: 07.10.2024 DE 102024209761
(71) Anmelder: Robert Bosch GmbH, 70442 Stuttgart (DE)
(72) Erfinder: Gessner, Jochen, 63517 Rodenbach (DE); Willems, Jan, 97839 Esselbach (DE); Heller, Christoph, 97828 Marktheidenfeld (DE)

(57) **Zusammenfassung**

Die Erfindung betrifft ein computerimplementiertes Verfahren zum automatisierten Bereitstellen von Softwaremodulen (34, 36, 38) für die Steuerung eines industriellen Systems (10), wobei das industrielle System (10) eine Vielzahl von steuerbaren Komponenten (12, 14, 16, 18) umfasst, wobei die Komponenten (12, 14, 16, 18) jeweils eine Steuerung mit einer Steuerungssoftware umfassen, wobei das Verfahren die Schritte umfasst:
- Empfangen einer Konfigurationsinformation (20) des industriellen Systems (10), wobei die Konfigurationsinformation (20) Angaben zur Art der in dem industriellen System (10) eingesetzten Komponenten (12, 14, 16, 18) umfasst;
- Klassifizieren der Konfigurationsinformation (20) und Identifizieren des zumindest einen für die Komponenten benötigten Softwaremoduls (34, 36, 38);
- Bereitstellen zumindest eines Softwaremoduls (34, 36, 38) entsprechend dem Klassifikationsergebnis zur Implementierung auf dem industriellen System (10).

## Beschreibung

Die Erfindung betrifft das automatisierte Bereitstellen von Software für industrielle Systeme.

### Stand der Technik

In der industriellen Automation spielen softwaregesteuerte Systeme eine zentrale Rolle, um komplexe Prozesse effizient und präzise zu steuern. Ein solches System kann beispielsweise eine automatische Montagelinie in der Automobilproduktion sein. Hierbei kommen Roboterarme, Förderbänder, Sensoren und Steuerungseinheiten zum Einsatz, die alle durch eine zentrale Software koordiniert werden. Die Roboterarme, ausgestattet mit multifunktionalen Greifwerkzeugen, führen Schweiß-, Montage- und Inspektionsarbeiten durch, wobei ihre Bewegungsabläufe durch programmierbare Logiksteuerungen (PLC) exakt gesteuert werden. Die Förderbänder transportieren die Fahrzeugteile zwischen den verschiedenen Stationen und passen ihre Geschwindigkeit automatisch an die Arbeitszyklen der Roboter an, um einen kontinuierlichen Fluss in der Produktion zu gewährleisten. Sensoren, die entlang der Produktionslinie installiert sind, überwachen den Zustand und die Position der Teile und liefern Echtzeitdaten an die Steuerungseinheiten. Die zentrale Software synchronisiert die Abläufe, passt die Bewegungsparameter der Roboter an und steuert die Geschwindigkeit der Förderbänder, um die Effizienz zu maximieren und die Qualität der Endprodukte sicherzustellen.

Ein weiteres Beispiel ist ein automatisches Lagerverwaltungssystem in einem großen Logistikzentrum. In einem solchen System kommen Regalbediengeräte, fahrerlose Transportsysteme (FTS), Barcode-Scanner und RFID-Lesegeräte zum Einsatz, die alle über eine Warehouse-Management-Software (WMS) gesteuert werden. Die Regalbediengeräte bewegen sich entlang von Regalen, um Waren zu lagern oder zu entnehmen, wobei sie durch hochpräzise Positionssensoren geführt werden. Diese Sensoren ermöglichen es dem System, die genaue Position jedes Artikels im Lager zu kennen. Die FTS, die ebenfalls durch die zentrale Software gesteuert werden, transportieren die Waren innerhalb des Lagers von den Regalen zu den Verpackungs- oder Versandstationen. Barcode-Scanner und RFID-Lesegeräte erfassen automatisch die Identität und den Standort der Waren und übermitteln diese Daten an die WMS, die die Lagerbestände in Echtzeit aktualisiert. Die Software plant und optimiert die Wege der Regalbediengeräte und FTS, um die Durchlaufzeiten zu minimieren und den Energieverbrauch zu reduzieren. Außerdem kann die Software automatisch Bestellvorgänge auslösen, wenn bestimmte Artikel knapp werden, was eine Justin-Time-Lieferkette unterstützt.

Ein drittes Beispiel für ein industrielles System ist eine hochmoderne CNC-Werkzeugmaschine, die in der Fertigung komplexer Metallteile eingesetzt wird. In diesem System arbeiten Spindeln, Werkzeugwechsler, Kühlmittelsysteme und Messtaster zusammen, um präzise Bearbeitungen durchzuführen. Die Steuerung dieser Komponenten erfolgt durch eine CNC-Software, die auf einer dedizierten Steuerungseinheit läuft. Die Spindeln, die mit hoher Geschwindigkeit rotieren, sind für die eigentliche Materialbearbeitung zuständig und werden von der Software in Bezug auf Drehzahl, Vorschub und Schnitttiefe gesteuert.

Der Werkzeugwechsler ermöglicht den automatischen Austausch von Werkzeugen, sodass unterschiedliche Bearbeitungsschritte ohne manuelles Eingreifen durchgeführt werden können. Das Kühlmittelsystem sorgt dafür, dass die Werkzeuge und Werkstücke während der Bearbeitung gekühlt werden, um Überhitzung zu verhindern und die Lebensdauer der Werkzeuge zu verlängern. Messtaster überwachen während und nach der Bearbeitung die Abmessungen der gefertigten Teile und übermitteln diese Daten an die CNC-Software, die gegebenenfalls Korrekturen in Echtzeit vornimmt, um die geforderte Präzision zu gewährleisten. Die Software steuert und überwacht nicht nur alle Bearbeitungsparameter, sondern erstellt auch die CNC-Programme, die die Bewegungsbahnen der Werkzeuge definieren, und kann diese Programme automatisch anpassen, um Änderungen in den Materialeigenschaften oder den Anforderungen an das Endprodukt zu berücksichtigen.

Diese Beispiele verdeutlichen, wie komplexe industrielle Systeme und Maschinen durch eine zentrale Software gesteuert und überwacht werden, um unterschiedliche Einsatzzwecke wie die Automobilproduktion, die Logistik und die präzise Fertigung zu erfüllen. Dabei kommen ähnliche Komponenten wie Roboterarme, Förderbänder, Sensoren und CNC-Einheiten zum Einsatz, die durch fortschrittliche Softwarelösungen koordiniert werden, um maximale Effizienz, Genauigkeit und Flexibilität zu erreichen.

Obwohl in unterschiedlichen industriellen Systemen die gleichen Komponenten verbaut sein können, entsteht daraus das Problem, dass die Software für ähnliche oder gleiche Komponenten in unterschiedlichen industriellen Systemen verschiedene Funktionen erfüllen und unterschiedliche Eigenschaften aufweisen muss.

Das betrifft sowohl die Entwicklung als auch den Betrieb dieser Systeme. Ein wesentliches Problem liegt in der Notwendigkeit, dieselbe oder sehr ähnliche Hardware auf unterschiedliche Weise anzusprechen, was die Softwareentwicklung erheblich komplexer macht. Wenn beispielsweise ein Roboterarm sowohl in einer Montagelinie zur präzisen Bauteilmontage als auch in einem Lagerverwaltungssystem zum Greifen und Platzieren von Waren eingesetzt wird, muss die Steuerungssoftware in der Lage sein, unterschiedliche Bewegungsmuster und Betriebsarten zu unterstützen.

In der Montagelinie könnte es auf höchste Präzision und Wiederholgenauigkeit ankommen, während im Lager die Geschwindigkeit und Flexibilität der Bewegungen im Vordergrund stehen. Diese unterschiedlichen Anforderungen erfordern spezialisierte Softwaremodule, die auf die jeweilige Anwendung zugeschnitten sind, obwohl die zugrunde liegende Hardware identisch sein könnte.

Ein weiteres Problem entsteht durch die Notwendigkeit, unterschiedliche Kommunikationsprotokolle und Schnittstellen zu unterstützen. Komponenten wie Sensoren oder Aktoren, die in verschiedenen Systemen eingesetzt werden, müssen möglicherweise mit unterschiedlichen Steuerungseinheiten oder Netzwerken kommunizieren. In einem CNC-Bearbeitungssystem könnte die Software beispielsweise über eine Echtzeit-Ethernet-Verbindung mit den Sensoren kommunizieren, um schnelle und präzise Steuerungen zu ermöglichen, während in einem automatisierten Lagerverwaltungssystem eine drahtlose Verbindung erforderlich ist, um die Mobilität der fahrerlosen Transportsysteme zu gewährleisten. Diese Unterschiede in der Kommunikation erfordern eine flexible und anpassbare Softwarearchitektur, die in der Lage ist, verschiedene Protokolle und Datenformate zu verarbeiten, ohne die Leistung oder Zuverlässigkeit zu beeinträchtigen.

Der Erfindung liegt somit die Aufgabe zugrunde, ein Verfahren vorzuschlagen, mit dem Softwaremodule zum Steuern eines industriellen Systems automatisiert und auf einfache Weise bereitgestellt werden können.

Die Aufgabe wird gelöst durch die Gegenstände der unabhängigen Ansprüche.

### Offenbarung der Erfindung

Gemäß einem ersten Aspekt der Erfindung wird diese Aufgabe gelöst durch ein computerimplementiertes Verfahren zum automatisierten Bereitstellen von Softwaremodulen für die Steuerung eines industriellen Systems, wobei das industrielle System eine Vielzahl von steuerbaren Komponenten umfasst. Die Komponenten umfassen jeweils eine Steuerung mit einer Steuerungssoftware.

Das Verfahren umfasst die Schritte:
- Empfangen einer Konfigurationsinformation des industriellen Systems, wobei die Konfigurationsinformation Angaben zur Art der in dem industriellen System eingesetzten Komponenten umfasst;
- Klassifizieren der Konfigurationsinformation und Identifizieren des zumindest einen für die Komponenten benötigten Softwaremoduls;
- Bereitstellen zumindest eines Softwaremoduls entsprechend dem Klassifikationsergebnis zur Implementierung auf dem industriellen System.

Der 2 Aspekt der Erfindungsmeldung "Identifikation der Klassifizierung des Gerätes zur dynamisch aufgebauten Anzeige einer passenden Ul" fehlt hier.

Der heutige Stand der Technik ist eine statische UI auf Basis der Produkt ID.

Künftig soll die UI zur Laufzeit an die Funktionen des hydraulischen Systems auf Basis der Klassifizierungsdaten dynamisch zusammengestellt werden um eine höhere Effizienz, Flexibilität und Skalierbarkeit zu erreichen.

Die Klassifizierungsdaten können hierbei entweder vom hydraulischen System eingelesen werden oder aber aus einer externen DB entnommen werden.

Hierbei handelt es sich prinzipiell um denselben Mechanismus wie bei der automatisierten Bereitstellung der Software für das hydraulischen System.

Das erfindungsgemäße Verfahren beginnt damit, dass eine Konfigurationsinformation empfangen wird. Diese Konfigurationsinformation kann beispielsweise auf ein Verbinden des klassifizierenden Systems, das das vorgeschlagene Verfahren ausführt, mit dem industriellen System oder dessen übergeordneter Steuereinheit erfolgen.

Die industrielle Steuereinheit kann mehrere Komponenten umfassen, die teilweise unterschiedliche und teilweise gleiche Funktionen ausführen und/oder unterschiedliche oder gleiche Eigenschaften aufweisen. Die Konfigurationsinformation kann beispielsweise eine Liste umfassen, in der die Komponenten, ihre Funktionen und/oder Eigenschaften aufgelistet sind.

Die Konfigurationsinformationen werden klassifiziert, um die benötigten Softwaremodule zu identifizieren. Anstelle eines starren Schemas werden die Softwaremodule auf Basis der Produktidentifikation modular erkannt und automatisiert zusammengestellt. Dieses zusammengestellte Softwarepaket mit einem oder mehreren Softwaremodulen wird dann an das industrielle System übertragen, wo es zur Verwendung installiert wird oder die vorhandene Software aktualisiert.

Das Verfahren ist unabhängig davon, wie komplex das industrielle System ist. Auch kommt es nicht darauf an, dass die einzelnen Komponenten identifiziert werden müssen. Gerade bei Komponenten mit eher kurzen Lebenszeiten oder hohen Wartungsintervallen kann dies kompliziert und aufwendig werden. Außerdem wird die Nutzerinteraktion für das Bereitstellen der benötigten Softwaremodule auf ein Minimum beschränkt, da ein Nutzer lediglich das industrielle System mit dem die Erfindung ausführenden System verbinden und gegebenenfalls das Verfahren initiieren muss. Dadurch wird die Fehleranfälligkeit beim Bereitstellen der Systemsoftware für das industrielle System gesenkt.

Die automatisierte Klassifikation der Konfigurationsinformation ermöglicht ein automatisiertes Abarbeiten und das Bereitstellen von geeigneten Softwaremodulen. Die Module werden dann zu einer fertigen Software für das industrielle System zusammengesetzt, sodass diesem für jede Funktion und Eigenschaft seiner Komponenten die korrekte und aktuelle Software zur Verfügung steht. Damit wird ein einfaches Bereitstellen von Steuerungssoftware für komplexe industrielle Systeme ermöglicht, was die Aufgabe der Erfindung löst.

In einer Ausführungsform erfolgt das Klassifizieren der Konfigurationsinformation für jede Komponente des industriellen Systems anhand zumindest einer Funktion der Komponente und/oder zumindest einer Eigenschaft der Komponente.

Beispielhafte Komponenten können Ventile, Fördermittel, etwa Förderbänder oder Greifarme, Maschinen zur Bearbeitung und/oder Sensoren umfassen. Jede Komponente hat einen eigenen Bedarf und eigene Anforderungen an die Steuerungssoftware. Dies liegt auf der Hand, da die Komponenten, beispielsweise Sensoren und Förderbänder, grundsätzlich unterschiedliche Funktionen haben und daher auch anders angesteuert werden müssen.

Gleichwohl können derart unterschiedliche Komponenten auch Softwaremodule verwenden, die identisch sind. Beispielsweise benötigt ein Sensor ebenso wie ein Förderband eine Stromversorgung. Auch wenn die benötigte elektrische Energie in den allermeisten Fällen in unterschiedlichen Größenordnungen liegen dürfte, so kann die Software, die die Energie für die Komponenten ein- und ausschaltet, dieselbe sein.

Dasselbe trifft auf Eigenschaften zu. Eine Eigenschaft einer Komponente kann beispielsweise sein, wie genau bzw. präzise die Steuerung sein muss. Je nach Aufgabe im Gesamtsystem können die Komponenten unterschiedliche Anforderungen haben. Dabei kann eine Optimierung des Ressourcenbedarfs erreicht werden, indem jeder Komponente eine Steuerung bereitgestellt wird, die die jeweiligen Anforderungen erfüllt, darüber aber nicht unnötig hinausgeht.

Beim Aktualisieren von Software kann die Version der gerade verwendeten Software ebenfalls eine Eigenschaft der Komponente sein. Bei der Klassifikation der Konfigurationsinformation kann diese dann berücksichtigt werden, indem nur Softwaremodule bereitgestellt werden, die aktueller als die bereits verwendeten sind. Dadurch wird das Bereitstellen der Steuerungssoftware beschleunigt und das industrielle System kann seine Arbeit schneller (wieder) aufnehmen.

In vorteilhafter Weise wird durch die Klassifikation der Konfigurationsinformation die Softwaremodule anhand der angeforderten Funktionen und/oder Eigenschaften der Komponenten die Abhängigkeit von der Art des industriellen Systems weiter gesenkt, sodass die Software weiter modularisierbar ist. Dadurch muss ein Softwaremodul nicht länger für eine bestimmte Art der Komponente, beispielsweise Ventile, ausgelegt werden, sondern kann in noch kleinere Pakete zerlegt werden, beispielsweise die Steuerung eines Aktuators oder das Schalten eines definierten Stroms.

In einer Ausführungsform umfasst das Klassifizieren der Konfigurationsinformation ein Unterteilen der benötigten Softwaremodule in von notwendige und optionale Softwaremodulen entsprechend der Art der in dem industriellen System eingesetzten Komponenten.

Die Unterteilung der benötigten Softwaremodule in optionale und notwendige Softwaremodule bewirkt in vorteilhafter Weise, dass das Bereitstellen der Softwaremodule verbessert wird. Beispielsweise kann die Konfigurationsinformation auf diese Weise auch dann abgearbeitet werden, wenn optionale Softwaremodule nicht verfügbar sind. Solange alle notwendigen Softwaremodule bereitgestellt werden können, kann das industrielle System mit Software versehen werden, die den Betrieb des industriellen Systems ermöglicht.

Darüber hinaus kann die Unterscheidung von notwendigen und optionalen Softwaremodulen dazu genutzt werden, die Softwarepakete entsprechend einer Nutzerkonfiguration bereitzustellen. Beispielsweise kann ein Nutzer angeben, dass er bestimmte Softwaremodule nicht verwenden möchte, auch wenn die entsprechenden Komponenten diese verwenden könnten. Dadurch kann das Bereitstellen der Softwaremodule personalisierbar ausgestaltet sein.

In einer Ausführungsform umfasst das Bereitstellen des zumindest einen Softwaremodul:
- Erzeugen eines Befehls zum Laden des zumindest einen Softwaremoduls aus dem Ergebnis des Klassifizierens der Konfigurationsinformation;
- Senden des Befehls zum Laden des zumindest Softwaremoduls an ein Speichersystem, wobei das Speichersystem eine Vielzahl von Softwaremodulen umfasst;
- Laden des zumindest einen Softwaremoduls aus dem Speichersystem; und
- Übertragen des zumindest einen Softwaremoduls an das industrielle System.

Das System, das die Konfigurationsinformation empfängt und klassifiziert, muss nicht das System sein, auf dem die Software dauerhaft gespeichert und vorrätig gehalten wird. Aus Gründen der Effizienz kann als Speichersystem eine Datenbank verwendet werden, die mit Hardware betrieben wird, die wiederum auf Langlebigkeit und eine hohe Verfügbarkeit ausgelegt ist.

Das System, welches die Klassifikation der Konfigurationsinformation ausführt, erzeugt einen Befehl, der an die Datenbank oder ein entsprechendes anderes Speichersystem gesendet wird. Von dort kann das zumindest eine angeforderte Softwaremodul direkt oder indirekt über das klassifizierende System an das industrielle System übertragen werden.

In einer Ausführungsform umfasst der Befehl zum Laden des zumindest einen Softwaremoduls eine Liste mit Funktionen und/oder Eigenschaften der in dem industriellen System umfassten Komponenten und nur die Softwaremodule werden aus dem Speicher geladen, die für die in der Liste enthaltenen Funktionen und/oder Eigenschaften geeignet sind.

In dieser Ausführungsform teilt das klassifizierende System dem Speichersystem nicht die Eigenschaften und Funktionen der benötigten Softwaremodule, sondern konkrete Modulbezeichnungen mit. Die Modulbezeichnungen können beispielsweise unter Angabe einer Modul-ID zu einer Liste zusammengefasst werden.

In einer Ausführungsform umfasst die Konfigurationsinformation eine Berichtigungskennung eines Nutzers, und wobei nur die Softwaremodule bereitgestellt werden, die für die Berechtigungskennung freigegeben sind.

Wenn das industrielle System mit dem klassifizierenden System verbunden wird, kann in dieser Ausführungsform eine Nutzerinformation abgefragt werden, um die Berechtigungskennung zu erhalten. Beispielsweise kann der Nutzer dazu aufgefordert werden, sich in dem klassifizierenden System anzumelden oder anderweitig seine Nutzerkennung bereitzustellen. Mit der Berechtigungskennung ist eine Auswahl an bestimmten Softwaremodulen verbunden. Dies kann beispielsweise sein, weil der Nutzer nur für die entsprechende Auswahl gezahlt hat. Eine weitere Möglichkeit der Beschränkung betrifft die Sicherheit. So können manche Nutzer für alle, andere für nur eine Auswahl an Softwaremodulen eine Freigabe besitzen, etwa weil sie nicht entsprechend geschult sind oder weil die Software von einem Vorgesetzten autorisiert werden muss.

In einer Ausführungsform umfasst das zumindest eine Softwaremodul ein Modul zum Erzeugen einer Benutzeroberfläche, ein Modul zum Steuern eines Sensors, ein Modul zum Steuern eines elektrischen Stroms, ein Modul zum Steuern eines Aktuators, und/oder ein Modul zum Ver- und/oder Entschlüsseln von Daten oder eine Kombination aus den genannten Modulen.

Module zum Erzeugen einer Benutzeroberfläche können verschiedene Elemente einer Mensch-Maschine-Schnittstelle umfassen, die nicht nur Informationen zum Status des industriellen Systems anzeigen, sondern auch Eingaben, insbesondere Einstellungen, eines Nutzers empfangen können. Darüber hinaus können die Softwaremodule Steuerungssoftware für die Komponenten umfassen, die in dem industriellen System vorhanden sind.

Ferner können die Softwaremodule kryptografisch sein, sodass beispielsweise die Kommunikation unter den Komponenten oder die Kommunikation des Nutzers mit den Komponenten und umgekehrt verschlüsselt werden kann. Dies würde insbesondere die Sicherheit des industriellen Systems erhöhen.

In einer Ausführungsform ist das industrielle System ein hydraulisches System, das mehrere Ventile, Kolben, Aktuatoren und/oder Steuergeräte umfasst.

In einem weiteren Aspekt betrifft die Erfindung ein Computerprogramm mit Programmcode, um ein Verfahren wie voranstehend beschrieben auszuführen, wenn das Computerprogramm auf einem Computer ausgeführt wird.

In einem weiteren Aspekt betrifft die Erfindung einen computerlesbaren Datenträger mit Programmcode eines Computerprogramms, um ein Verfahren wie voranstehend beschrieben auszuführen, wenn das Computerprogramm auf einem Computer ausgeführt wird.

In einem weiteren Aspekt betrifft die Erfindung ein System zum automatisierten Bereitstellen von Softwaremodulen für die Steuerung eines industriellen Systems, wobei das System ausgebildet ist, ein Verfahren wie voranstehend beschrieben auszuführen. Zusammenfassend ist festzustellen, dass mit der vorliegenden Erfindung ein computerimplementiertes Verfahren zum automatisierten Bereitstellen von Softwaremodulen für die Steuerung eines industriellen Systems, ein Computerprogramm mit Programmcode, ein computerlesbarer Datenträger und ein System zum automatisierten Bereitstellen von Softwaremodulen für die Steuerung eines industriellen Systems angegeben werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
Fig. 1 schematisch und gemäß einer Ausführungsform, wie Softwaremodule für ein industrielles System bereitgestellt werden; und
Fig. 2 die Komplexität der benötigten Softwaremodule für die Steuerung eines Ventils in einem industriellen System.

In den Figuren der Zeichnungen bezeichnen gleiche Bezugszeichen gleiche oder funktionsgleiche Elemente, Bauteile oder Komponenten, soweit nichts Gegenteiliges angegeben ist.

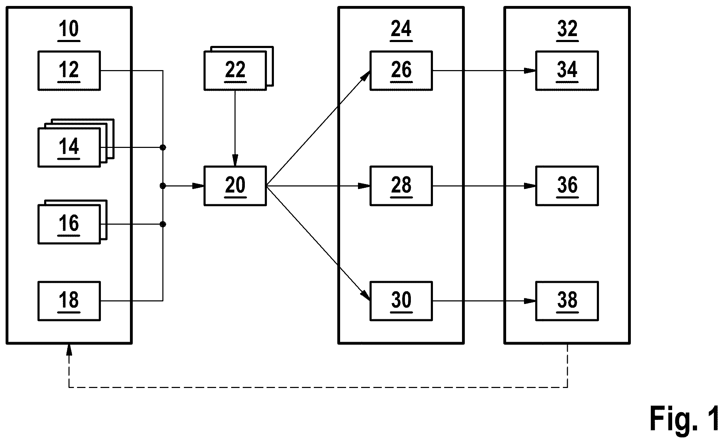

Fig. 1 zeigt ein industrielles System 10, mit einer Vielzahl an Komponenten 12, 14, 16, 18. Die Komponenten 14 und 16 sind mehrfach vorhanden. Jede Komponente benötigt für sich genommen individuelle Software. Die Software kann auch bei unterschiedlichen Komponenten identische Funktionen und/oder Eigenschaften dienen, beispielsweise der Stromregelung oder dem Auslesen und Verarbeiten von Messwerten. Die Überlappung des Einsatzbereichs einzelner Softwaremodule wird im Folgenden ausgenutzt.

Die Informationen zu den Komponenten 12, 14, 16 und 18 werden zu einer Konfigurationsinformation 20 zusammengefasst. Die Konfigurationsinformation kann daher als Anfrage mit einer Liste an Informationen über die Komponenten 12, 14, 16 und 18 betrachtet werden, in der beispielsweise die Art der Komponenten, deren Funktion und deren Eigenschaften enthalten sind.

Der Konfigurationsinformation können ferner externe und gegebenenfalls vom industriellen System 10 unabhängige oder zumindest nur mittelbar abhängige Informationen 22 hinzugefügt werden. Darunter können beispielsweise Informationen sein, ob der Nutzer, der die Softwaremodule für das industrielle System 10 bereitstellen möchte, dazu berechtigt oder befähigt ist. Ferner können allgemeine Informationen zum zulässigen Umfang der bereitgestellten Softwaremodule, einschließlich der Verfügbarkeit optionaler Module, bereitgestellt sein. Die Informationen 22 können daher aus einer anderen Quelle stammen als die Information über die Art der Komponenten 12, 14, 16 und 18 des industriellen Systems 10.

Die Konfigurationsinformation 20 wird dann klassifiziert. Diese Aufgabe übernimmt ein klassifizierendes System 24, das beispielsweise als Webserver betrieben werden kann. Die Verbindung des industriellen Systems 10 mit dem klassifizierenden System 24 kann, wenn das klassifizierende System 24 ein Webserver ist, über ein Netzwerk, insbesondere ein Intranet oder das Internet, hergestellt werden. Andernfalls kann das industrielle System 10 auch über eine Direktverbindung mit dem klassifizierenden System 24 kommunizieren.

Das klassifizierende System 24 bestimmt Funktionen und Eigenschaften 26, 28 und 30, die die bereitzustellenden Softwaremodule abdecken können müssen. Dazu kann das klassifizierende System 24 beispielsweise die Konfigurationsinformation 20 auslesen und mit einer Tabelle vergleichen, in der für jede erdenkliche Komponente 12, 14, 16 und 18 die entsprechenden Softwaremodule angegeben sind. Eleganter und schneller ist eine Klassifikation mittels eines Entscheidungsbaums, mit dem zunächst die Art der betreffenden Komponenten 12, 14, 16 und 18 festgestellt und dann, gegebenenfalls durch eine tiefere Klassifikation, anhand der Informationen 22 die entsprechenden Funktionen und Eigenschaften 26, 28 und 30 ermittelt werden.

Das klassifizierende System 24 erzeugt mit den Funktionen und Eigenschaften 26, 28 und 30 eine Anfrage, die an ein Speichersystem 32 übertragen wird. Das Speichersystem 32 kann beispielsweise eine Datenbank sein, die mit dem klassifizierenden System verbunden ist. Die Verbindung kann insbesondere über ein Netzwerk, beispielsweise das Internet, hergestellt werden. Alternativ kann das Speichersystem 32 als Datenbank auf demselben Rechensystem implementiert sein wie das klassifizierende System 24.

Das Speichersystem 32 empfängt die Anfrage von dem klassifizierenden System 24, die vorzugsweise eine Liste enthält, welche Funktionen und Eigenschaften 26, 28 und 30 die bereitzustellenden Softwaremodule abdecken können müssen. Entsprechend der Anfrage bzw. der Liste stellt das Speichersystem 32 dann die Softwaremodule 34, 36 und 38 bereit.

Die Softwaremodule 34, 36 und 38 werden dann auf direktem oder indirektem Weg an das industrielle System 10 übertragen, wo sie zur Steuerung der Komponenten eingesetzt werden können.

In Figur 1 ist ersichtlich, dass sich die vier unterschiedlichen Komponenten 12, 14, 16 und 18 die drei Funktionen und Eigenschaften 26, 28 und 30 teilen, wofür drei Softwaremodule 34, 36 und 38 bereitgestellt werden. Das bedeutet, die Softwaremodule 34, 36 und 38 werden von den Komponenten 12, 14, 16 und 18 gemeinsam verwendet bzw. auf den jeweiligen Steuergeräten installiert oder aktualisiert.

Figur 1 zeigt den Ablauf schematisch. Das heißt, in anderen, gegebenenfalls deutlich komplexeren Konfigurationen kann das industrielle System 10 deutlich mehr Komponenten aufweisen. Das klassifizierende System 24 kann mehr Funktionen und Eigenschaften identifizieren und in dem Speichersystem 32 werden mehr Softwaremodule bereitgestellt.

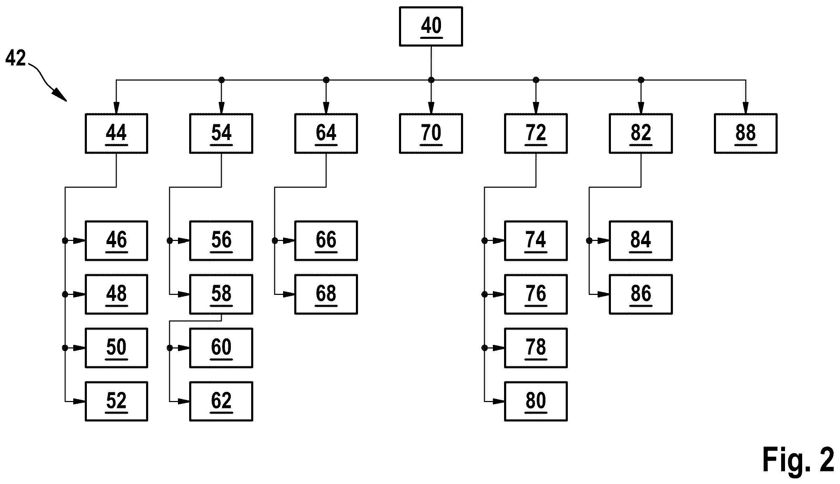

Fig. 2 zeigt schematisch, wie komplex die Steuerung einer einzelnen Komponente sein kann. Dazu wird beispielhaft ein Ventil 40 betrachtet.

Das Ventil 40 hat mehrere Kernfunktionen 42, die wiederum mehrere Unterfunktionen haben können. Die erste Kernfunktion kann beispielsweise ein Command Interface 44 sein, dessen Funktion es ist, Befehle zu empfangen. Zur Steuerung des Command Interfaces 44 werden daher Softwaremodule 46, 48, 50 und 52 bereitgestellt, die die Eingänge "Analog", "Analog mit Eingaben" "Analog mit sicheren Eingaben" und "IO-Link" steuern.

Eine zweite Kernfunktion 42 kann den Betrieb eines Sensors 54 umfassen, der beispielsweise den Druck im Inneren des Ventils überwacht. Der Sensor benötigt daher ein Softwaremodul 56 zum Messen des Drucks. Daneben umfasst der Sensor die Funktion der Überwachung der Schieberstellung 58. Diese Funktion erfordert ein Modul zur Steuerung des analogen Messstroms 60 und des induktiven Messstroms 62.

Die Funktion der Stromversorgung 64 wird von einer vollen und einer halben Brücke übernommen. Diese werden von den Modulen 66 und 68 gesteuert.

Ein Nutzermodul 70 übernimmt die Aufgabe, den Nutzer auf eine Berechtigung zum Steuern des Ventils zu überprüfen.

Die eigentliche Steuerungsarbeit des Ventils, nämlich die Steuerung des Digitalcontrollers 72 übernehmen vier Softwaremodule, eines für den Stromcontroller 74, eines für den DruckVentil-Controller 76, eines für die Richtungsventilsteuerung 78 und eines für Richtungssteuerungen mit besonders hohem Ansprechverhalten 80.

Die Funktion des Schlüsselmanagements 82 regelt mit den Softwaremodulen 84 und 86 die Schlüssel nach dem Release oder bei der Fertigung.

Schließlich benötigt das Ventil 40 ein Softwaremodul 40, das mit dem Interface kommuniziert und dieses gegebenenfalls sogar erzeugt.

## Patentansprüche

1. Computerimplementiertes Verfahren zum automatisierten Bereitstellen von Softwaremodulen (34, 36, 38) für die Steuerung eines industriellen Systems (10), wobei das industrielle System (10) eine Vielzahl von steuerbaren Komponenten (12, 14, 16, 18) umfasst, wobei die Komponenten (12, 14, 16, 18) jeweils eine Steuerung mit einer Steuerungssoftware umfassen, wobei das Verfahren die Schritte umfasst:
- Empfangen einer Konfigurationsinformation (20) des industriellen Systems (10), wobei die Konfigurationsinformation (20) Angaben zur Art der in dem industriellen System (10) eingesetzten Komponenten (12, 14, 16, 18) umfasst;
- Klassifizieren der Konfigurationsinformation (20) und Identifizieren des zumindest einen für die Komponenten benötigten Softwaremoduls (34, 36, 38);
- Bereitstellen zumindest eines Softwaremoduls (34, 36, 38) entsprechend dem Klassifikationsergebnis zur Implementierung auf dem industriellen System (10).

2. Computerimplementiertes Verfahren nach Anspruch 1, wobei das Klassifizieren der Konfigurationsinformation (20) für jede Komponente (12, 14, 16, 18) des industriellen Systems (10) anhand zumindest einer Funktion der Komponente (12, 14, 16, 18) und/oder zumindest einer Eigenschaft der Komponente (12, 14, 16, 18) erfolgt.

3. Computerimplementiertes Verfahren nach einem der vorangegangenen Ansprüche, wobei das Klassifizieren der Konfigurationsinformation (20) ein Unterteilen der benötigten Softwaremodule (34, 36, 38) in von notwendige und optionale Softwaremodule entsprechend der Art der in dem industriellen System (20) eingesetzten Komponenten (12, 14, 16, 18) umfasst.

4. Computerimplementiertes Verfahren nach einem der vorangegangenen Ansprüche, wobei das Bereitstellen des zumindest einen Softwaremoduls (34, 36, 38) umfasst:
- Erzeugen eines Befehls zum Laden des zumindest einen Softwaremoduls (34, 36, 38) aus dem Ergebnis des Klassifizierens der Konfigurationsinformation (20);
- Senden des Befehls zum Laden des zumindest Softwaremoduls (34, 36, 38) an ein Speichersystem (32), wobei das Speichersystem (32) eine Vielzahl von Softwaremodulen (34, 36, 38) umfasst;
- Laden des zumindest einen Softwaremoduls (34, 36, 38) aus dem Speichersystem (32); und
- Übertragen des zumindest einen Softwaremoduls (34, 36, 38) an das industrielle System (10).

5. Computerimplementiertes Verfahren nach Anspruch 4, wobei der Befehl zum Laden des zumindest einen Softwaremoduls (34, 36, 38) eine Liste mit Funktionen und/oder Eigenschaften (26, 28, 30) der in dem industriellen System (10) umfassten Komponenten (12, 14, 16, 18) umfasst und wobei nur die Softwaremodule (34, 36, 38) aus dem Speichersystem (32) geladen werden, die für die in der Liste enthaltenen Funktionen und/oder Eigenschaften (34, 36, 38) geeignet sind.

6. Computerimplementiertes Verfahren nach einem der vorangegangenen Ansprüche, wobei die Konfigurationsinformation (20) eine Berichtigungskennung eines Nutzers umfasst, und wobei nur die Softwaremodule (34, 36, 38) bereitgestellt werden, die für die Berechtigungskennung freigegeben sind.

7. Computerimplementiertes Verfahren nach einem der vorangegangenen Ansprüche, wobei das zumindest eine Softwaremodul (34, 36, 38) ein Modul zum Erzeugen einer Benutzeroberfläche, ein Modul zum Steuern eines Sensors, ein Modul zum Steuern eines elektrischen Stroms, ein Modul zum Steuern eines Aktuators, und/oder ein Modul zum Ver- und/oder Entschlüsseln von Daten oder eine Kombination aus den genannten Modulen umfasst.

8. Computerimplementiertes Verfahren nach einem der vorangegangenen Ansprüche, wobei das industrielle System (10) ein hydraulisches System ist, das mehrere Ventile (40), Kolben, Aktuatoren und/oder Steuergeräte umfasst.

9. Computerprogramm mit Programmcode, um ein Verfahren nach einem der Ansprüche 1 bis 8 auszuführen, wenn das Computerprogramm auf einem Computer ausgeführt wird.

10. Computerlesbarer Datenträger mit Programmcode eines Computerprogramms, um ein Verfahren nach einem der Ansprüche 1 bis 8 auszuführen, wenn das Computerprogramm auf einem Computer ausgeführt wird.

11. Klassifizierendes System (24) zum automatisierten Bereitstellen von Softwaremodulen für die Steuerung eines industriellen Systems, wobei das System ausgebildet ist, ein Verfahren nach einem der Ansprüche 1 bis 8 auszuführen.
